# EUROPEAN PATENT APPLICATION

(11) **EP 4 700 638 A1**
(43) Date of publication of application: **25.02.2026**
(21) Application number: 25196632.1
(22) Date of filing: 19.08.2025
(51) Int. Cl.: G06F 30/27, G06F 119/06, G06F 113/04, G06F 30/367, H02J 3/38

(54) **SIMULATION METHOD FOR PHOTOVOLTAIC POWER STATION**

(30) Priority: 19.08.2024 CN 202411140702
(71) Applicant: Huawei Digital Power Technologies Co., Ltd., Shenzhen, Guangdong 518043 (CN)
(72) Inventor: CHEN, Xuebing, Shenzhen, Guangdong, 518043 (CN); WANG, Xu, Shenzhen, Guangdong, 518043 (CN); SHAO, Zhangping, Shenzhen, Guangdong, 518043 (CN)
(74) Representative: Maiwald GmbH

(57) **Abstract**

Embodiments of this application provide a simulation method for a photovoltaic power station. In a data collection phase, all data of all inverters in steady-state and transient-state processes is collected; then clustering is performed on all the inverters based on the data and line impedances to obtain a plurality of clusters; equivalent models are respectively constructed for the plurality of clusters; and an internal algorithm parameter of the clustering is adjusted, so that an error of equivalent models obtained by using the adjusted clustering is less than a specified value. The clustering of all the inverters and the construction of the equivalent models can increase the simulation speed compared with a detailed model, and can increase the simulation accuracy compared with a single-machine model. In the clustering of all the inverters, the use of all the data in the steady-state and transient-state processes for the clustering leads to an increase in the overall accuracy of the finally simulated equivalent models for steady-state and transient-state fitting.

## Description

### TECHNICAL FIELD

The present invention relates to the field of photovoltaic power station design technologies, and to a simulation method for a photovoltaic power station.

### BACKGROUND

Currently, with the development of photovoltaic power stations, they include an increasing number of power generation units. Each of the power generation units includes a photovoltaic array and an inverter for converting light energy from the photovoltaic array into electrical energy. Outputs of inverters in the power generation units are connected to a power grid at a connection point. In the simulation of a photovoltaic power station that includes a large number of photovoltaic arrays and inverters, if a detailed model is established for each power generation unit, although high-accuracy simulation can be achieved, detailed models included in the simulation process are large in scale, have a high complexity, and take an excessive period of simulation time. If a single power generation unit is used to represent all power generation units to establish a single-machine model, although the single-machine model has a reduced complexity and an increased simulation speed, a simulation error is inevitably introduced, which reduces simulation accuracy. Therefore, how to increase a simulation computing speed while ensuring simulation accuracy is a technical problem that needs to be urgently resolved in the simulation and modeling of a large-scale photovoltaic power station.

### SUMMARY

This application provides a simulation method for a photovoltaic power station, to increase a simulation speed while ensuring simulation accuracy.

According to a first aspect, this application provides a simulation method for a photovoltaic power station. The simulation method includes the following steps: Line impedances, namely, RL values, of all inverters in the photovoltaic power station to a grid-connected point are obtained. First output data of all the inverters in a first time period and second output data of all the inverters in a second time period are collected. Specifically, the first time period and the second time period are continuous time periods, and the first time period and the second time period may form a continuous time window for collecting data. Output data of at least one inverter among all the inverters is adjusted at a time point between the first time period and the second time period. That is, a perturbation parameter is applied to the photovoltaic power station at the time point between the first time period and the second time period, so that the second output data changes relative to the first output data. It may be considered that, the first output data collected before the perturbation is applied is output data of all the inverters in a steady-state process, and the second output data collected after the perturbation is applied is output data of all the inverters in a transient-state process. Clustering is performed on all the inverters based on the first output data, the second output data, and the line impedances of all the inverters to obtain a plurality of clusters. Equivalent models are respectively constructed for the plurality of clusters. An internal algorithm parameter of the clustering is adjusted, so that an error of equivalent models obtained by using the adjusted clustering is less than a specified value, to achieve target accuracy and efficiency.

According to the simulation method provided in this embodiment of this application, the clustering of all the inverters and the construction of the equivalent models can increase the simulation speed compared with a detailed model, and can increase the simulation accuracy compared with a single-machine model. In the clustering of all the inverters, the use of all the data in the steady-state and transient-state processes for the clustering leads to an increase in the overall accuracy of the finally simulated equivalent models for steady-state and transient-state fitting.

In some embodiments of this application, collecting the first output data of all the inverters in the first time period and the second output data of all the inverters in the second time period may specifically include collecting one or more of an output active power P waveform, an output reactive power Q waveform, an output voltage V waveform, or an output current I waveform of all the inverters in the first time period and the second time period.

In some embodiments of this application, adjusting the output data of the at least one inverter among all the inverters, that is, applying the perturbation parameter to the photovoltaic power station, may specifically include adjusting one or more of an output active power, an output reactive power, an output voltage, or an output current of one or more inverters among all the inverters. Changes in output parameters of some inverters due to, for example, some photovoltaic modules being blocked during actual use of the photovoltaic power station may be simulated. However, in the simulation of, for example, a short-to-ground fault of an inverter during actual use of the photovoltaic power station, a shunt branch to ground may be added at an output terminal of the inverter, which finally causes an output voltage parameter or the like of the inverter to change. Alternatively, adjusting the output data of the at least one inverter among all the inverters, that is, applying the perturbation parameter to the photovoltaic power station, may specifically include adjusting one or more of an output active power, an output reactive power, an output voltage, or an output current of all the inverters. In the simulation of a fault such as low voltage ride through that occurs in the connected power grid during actual use of the photovoltaic power station, a shunt branch to ground may be added at the grid-connected point, or a grid voltage is directly adjusted, which finally causes output voltage parameters or the like of all the inverters to change.

In some embodiments of this application, duration of the first time period for collecting the first output data and duration of the second time period for collecting the second output data may be adjusted as required, and a proportional relationship between the two may further be adjusted. For example, the duration of the first time period for the first output data and the duration of the second time period for the second output data may be set to be the same. That is, data volumes of the obtained steady-state and transient-state data are relatively consistent, so that in the subsequent clustering, weights of the steady-state and transient-state data are relatively consistent, to ensure that the overall accuracy of the finally simulated equivalent models for steady-state and transient-state fitting is relatively consistent. When the transient-state process is relatively complex, the duration of the second period may be increased to increase the weight of the transient-state data. Alternatively, the duration of the first time period may be increased to increase the weight of the steady-state data.

In some embodiments of this application, performing the clustering on all the inverters may specifically include performing the clustering on all the inverters by using an algorithm such as a k-means (k-means) clustering algorithm, an affinity propagation clustering algorithm, a spectral clustering algorithm, or a hierarchical clustering algorithm.

In some embodiments of this application, respectively constructing the equivalent models for the plurality of clusters may be specifically implemented by the following: first, a central line impedance value (RL value) of each of the plurality of clusters may be determined; and then, the equivalent models are respectively constructed for the plurality of clusters based on the central line impedance value.

In some embodiments of this application, respectively constructing the equivalent models for the plurality of clusters may specifically include respectively constructing the equivalent models for the plurality of clusters by using an algorithm such as a capacity-weighting method.

In some embodiments of this application, adjusting the internal algorithm parameter of the clustering may be specifically implemented by the following: first, simulation is separately performed by using the equivalent models and a detailed model constructed for each of the inverters, to obtain simulation results; and then, the simulation result output by the detailed model is used as a reference, and when a difference (the difference may be considered as an error) between the simulation result of the equivalent models and the simulation result of the detailed model is greater than the specified value, for example, 5% or 10%, the internal algorithm parameter of the clustering is adjusted to achieve the target accuracy and efficiency.

In some embodiments of this application, separately performing the simulation by using the equivalent models and the detailed model constructed for each of the inverters, to obtain the simulation results may be specifically implemented by the following: in the process of separately performing the simulation by using the equivalent models and the detailed model, output data is adjusted, and simulation results in a continuous time period including a time point of the adjustment is obtained; that is, the simulation results include all output data in the steady-state and transient-state processes.

In some embodiments of this application, the simulation results may specifically include an output active power waveform, an output reactive power waveform, an output voltage waveform, and an output frequency waveform. The foregoing data may be compared to obtain corresponding error values, so that different clustering parameters are adjusted based on the error values.

### BRIEF DESCRIPTION OF DRAWINGS

FIG. 1 is a diagram of an architecture of a photovoltaic power station;
FIG. 2 is a diagram of an architecture of an equivalent model of a photovoltaic power station that is obtained by using a simulation method according to an embodiment of this application;
FIG. 3 is a schematic flowchart of a simulation method for a photovoltaic power station according to an embodiment of this application;
FIG. 4 is a diagram of an architecture of a photovoltaic power station that needs to be simulated in Embodiment 1;
FIG. 5a is a comparison diagram of simulations of active powers output by various models in Embodiment 1;
FIG. 5b is a comparison diagram of simulations of reactive powers output by various models in Embodiment 1;
FIG. 5c is a comparison diagram of simulations of voltages output by various models in Embodiment 1;
FIG. 5d is a comparison diagram of simulations of frequencies output by various models in Embodiment 1;
FIG. 6a is a comparison diagram of simulations of active powers output by various models in Embodiment 2;
FIG. 6b is a comparison diagram of simulations of reactive powers output by various models in Embodiment 2;
FIG. 6c is a comparison diagram of simulations of voltages output by various models in Embodiment 2;
FIG. 6d is a comparison diagram of simulations of frequencies output by various models in Embodiment 2;
FIG. 7a is a comparison diagram of simulations of active powers output by various models in Embodiment 3;
FIG. 7b is a comparison diagram of simulations of reactive powers output by various models in Embodiment 3;
FIG. 7c is a comparison diagram of simulations of voltages output by various models in Embodiment 3; and
FIG. 7d is a comparison diagram of simulations of frequencies output by various models in Embodiment 3.

### DESCRIPTION OF EMBODIMENTS

To make a person of ordinary skill in the art understand technical solutions in this application better, the following clearly and completely describes the technical solutions in embodiments of this application with reference to the accompanying drawings.

It should be noted that, in this specification, claims, and accompanying drawings of this application, the terms "first", "second", and the like are intended to distinguish similar objects but do not necessarily indicate a specific order or sequence. It should be understood that data used in such a way is interchangeable in a proper circumstance, so that embodiments of this application described herein can be implemented in an order other than the order illustrated or described herein. Implementations described in the following example embodiments do not represent all implementations consistent with this application. On the contrary, the implementations are merely examples of apparatuses and methods that are described in the appended claims in detail and that are consistent with some aspects of this application.

At present, the common simulation methods for a photovoltaic power station include a single-machine equivalence method and a multiple-machine equivalence method. The single-machine equivalence method is a 1-to-1 equivalence method that includes directly calculating an average value of output parameters of all power generation units in a photovoltaic power station and using one power generation unit as an equivalent of one photovoltaic subarray or even one photovoltaic power station. The multiple-machine equivalence method includes performing clustering on all power generation units in a photovoltaic power station and using a central value for each cluster as an equivalent of all inverters in the cluster. In this way, one photovoltaic power station uses a plurality of power generation units for equivalence, that is, an N-to-1 equivalence method, where N is an integer greater than 1.

When parameters of all power generation units in the photovoltaic power station are relatively dispersed, the use of the single-machine equivalence method for simulation may lead to a significant simulation error. In the simulation using the multiple-machine equivalence method, operational data of the power generation units at a specific time is usually used as a criterion of clustering and grouping. An equivalent model constructed with such data tends to be inadequate in fitting a transient-state process. If operational data of the transient-state process is used as the criterion of clustering and grouping, an equivalent model constructed with such data tends to be inadequate in fitting a steady-state process.

In view of this, embodiments of this application provide a simulation method for a photovoltaic power station, which is applicable to equivalent modeling of a photovoltaic power station built with large-scale power generation units. The simulation method can significantly reduce the simulation scale of the photovoltaic power station, increase the simulation computing speed, and ensure the modeling accuracy of steady-state and transient-state processes. That is, the efficient, accurate simulation of the photovoltaic power station is achieved by using an efficient, high-accuracy equivalent modeling method, thereby providing accurate reference for stability analysis and fault experiment analysis for the photovoltaic power station using the equivalent model obtained through simulation.

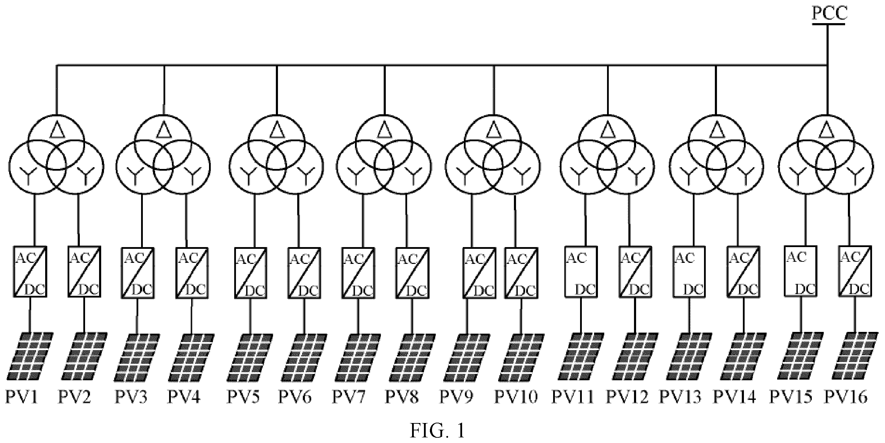

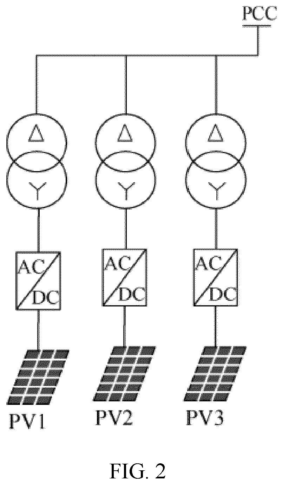

The simulation method provided in this application may be applied in a modeling process of a photovoltaic power station with a large number of power generation units. Referring to FIG. 1, a large number of photovoltaic arrays PV1, PV2, ..., PV16 in a photovoltaic power station are connected to a power grid PCC via connected inverters DC/AC and transformers. Referring to FIG. 2, the simulation method of this application allows a detailed model established for each power generation unit to be simplified into a small number of equivalent models, for example, three equivalent models shown in FIG. 2.

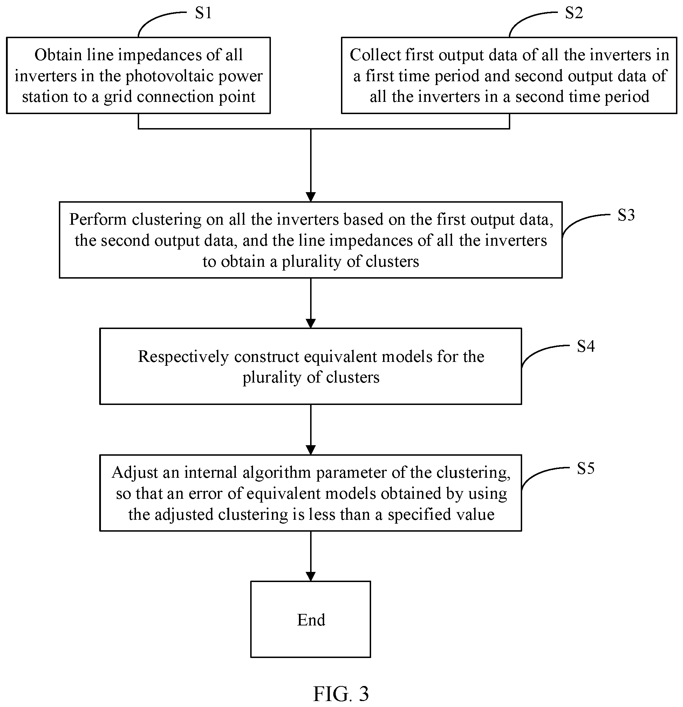

Referring to FIG. 3, a simulation method for a photovoltaic power station according to an embodiment of this application specifically includes the following steps.

S1: Obtain line impedances, namely, RL values, of all inverters in the photovoltaic power station to a grid-connected point. Specifically, the line impedances of the inverters in the photovoltaic power station vary depending on lengths of cables from the inverters to the connection point. Therefore, the line impedances of the inverters vary to some extent.

S2: Collect first output data of all the inverters in a first time period and second output data of all the inverters in a second time period. Specifically, the first time period and the second time period are continuous time periods, and the first time period and the second time period may form a continuous time window for collecting data. Output data of at least one inverter among all the inverters is adjusted at a time point between the first time period and the second time period. That is, a perturbation parameter is applied to the photovoltaic power station at the time point between the first time period and the second time period, so that the second output data changes relative to the first output data. It may be considered that, the first output data collected before the perturbation is applied is output data of all the inverters in a steady-state process, and the second output data collected after the perturbation is applied is output data of all the inverters in a transient-state process.

S3: Perform clustering on all the inverters based on the first output data, the second output data, and the line impedances of all the inverters to obtain a plurality of clusters. Although the use of all data in the steady-state and transient-state processes for clustering requires a larger amount of information than the use of single time data, the clustering is more accurate, leading to an increase in the overall accuracy of the finally simulated equivalent models for steady-state and transient-state fitting.

S4: Respectively construct equivalent models for the plurality of clusters. Because the plurality of clusters are obtained based on all the data in the steady-state and transient-state processes, the overall accuracy of the finally simulated equivalent models for steady-state and transient-state fitting is increased.

S5: Adjust an internal algorithm parameter of the clustering, so that an error of equivalent models obtained by using the adjusted clustering is less than a specified value, to achieve target accuracy and efficiency.

According to the foregoing simulation method provided in this embodiment of this application, the clustering of all the inverters and the construction of the equivalent models can increase the simulation speed compared with a detailed model, and can increase the simulation accuracy compared with a single-machine model. In the clustering of all the inverters, the use of all the data in the steady-state and transient-state processes for the clustering leads to an increase in the overall accuracy of the finally simulated equivalent models for steady-state and transient-state fitting.

In some embodiments of this application, the foregoing step S2 of collecting the first output data of all the inverters in the first time period and the second output data of all the inverters in the second time period may specifically include collecting one or more of an output active power P waveform, an output reactive power Q waveform, an output voltage V waveform, or an output current I waveform of all the inverters in the first time period and the second time period. Collecting output power P and Q waveforms of all the inverters in steady state and transient state is used as an example in the following description.

In some embodiments of this application, the foregoing step S2 of adjusting the output data of the at least one inverter among all the inverters, that is, applying the perturbation parameter to the photovoltaic power station, may specifically include adjusting one or more of an output active power, an output reactive power, an output voltage, or an output current of one or more inverters among all the inverters. Changes in output parameters of some inverters due to, for example, some photovoltaic modules being blocked during actual use of the photovoltaic power station may be simulated. However, in the simulation of, for example, a short-to-ground fault of an inverter during actual use of the photovoltaic power station, a shunt branch to ground may be added at an output terminal of the inverter, which finally causes an output voltage parameter or the like of the inverter to change. Alternatively, the foregoing step S2 of adjusting the output data of the at least one inverter among all the inverters, that is, applying the perturbation parameter to the photovoltaic power station, may specifically include adjusting one or more of an output active power, an output reactive power, an output voltage, or an output current of all the inverters. In the simulation of a fault such as low voltage ride through that occurs in the connected power grid during actual use of the photovoltaic power station, a shunt branch to ground may be added at the grid-connected point, or a grid voltage is directly adjusted, which finally causes output voltage parameters or the like of all the inverters to change.

In some embodiments of this application, duration of the first time period for collecting the first output data and duration of the second time period for collecting the second output data in the foregoing step S2 may be adjusted as required, and a proportional relationship between the two may further be adjusted. For example, the duration of the first time period for the first output data and the duration of the second time period for the second output data may be set to be the same. That is, data volumes of the obtained steady-state and transient-state data are relatively consistent, so that in the subsequent clustering, weights of the steady-state and transient-state data are relatively consistent, to ensure that the overall accuracy of the finally simulated equivalent models for steady-state and transient-state fitting is relatively consistent. When the transient-state process is relatively complex, the duration of the second period may be increased to increase the weight of the transient-state data. Alternatively, the duration of the first time period may be increased to increase the weight of the steady-state data.

In some embodiments of this application, the foregoing step S3 of performing the clustering on all the inverters may specifically include performing the clustering on all the inverters by using an algorithm such as a k-means (k-means) clustering algorithm, an affinity propagation clustering algorithm, a spectral clustering algorithm, or a hierarchical clustering algorithm.

In some embodiments of this application, the foregoing step S4 of respectively constructing the equivalent models for the plurality of clusters may be specifically implemented by the following: first, a central line impedance value (RL value) of each of the plurality of clusters may be determined; and then, the equivalent models are respectively constructed for the plurality of clusters based on the central line impedance value.

In some embodiments of this application, the foregoing step S4 of respectively constructing the equivalent models for the plurality of clusters may specifically include respectively constructing the equivalent models for the plurality of clusters by using an algorithm such as a capacity-weighting method.

In some embodiments of this application, the foregoing step S5 of adjusting the internal algorithm parameter of the clustering may be specifically implemented by the following: first, simulation is separately performed by using the equivalent models and a detailed model constructed for each of the inverters, to obtain simulation results; and then, the simulation result output by the detailed model is used as a reference, and when a difference (the difference may be considered as an error) between the simulation result of the equivalent models and the simulation result of the detailed model is greater than the specified value, for example, 5% or 10%, the internal algorithm parameter of the clustering is adjusted to achieve the target accuracy and efficiency.

In some embodiments of this application, separately performing the simulation by using the equivalent models and the detailed model constructed for each of the inverters, to obtain the simulation results may be specifically implemented by the following: in the process of separately performing the simulation by using the equivalent models and the detailed model, output data is adjusted, and simulation results in a continuous time period including a time point of the adjustment is obtained; that is, the simulation results include all output data in the steady-state and transient-state processes.

In some embodiments of this application, the simulation results may specifically include an output active power waveform, an output reactive power waveform, an output voltage waveform, and an output frequency waveform. The foregoing data may be compared to obtain corresponding error values, so that different clustering parameters are adjusted based on the error values.

Several specific embodiments are used below to illustrate that the foregoing simulation method provided in this application can increase the simulation accuracy and simulation speed.

### Embodiment 1:

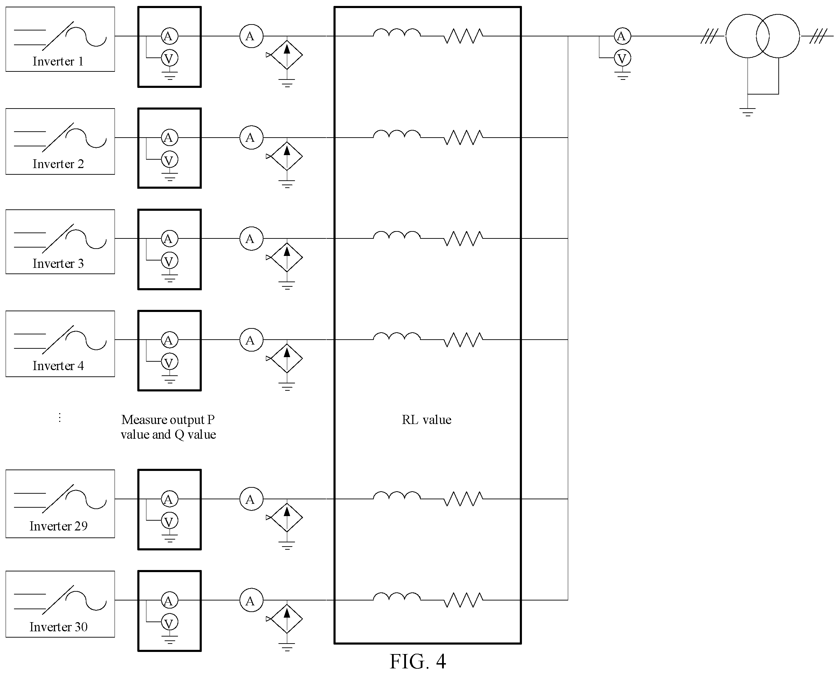

Referring to FIG. 4, as an example, a photovoltaic power station includes 30 photovoltaic arrays and 30 inverters. At a time t = 2.1s, a grid voltage is reduced to 0.8 p.u., so that inverters in the photovoltaic power station enter low-voltage-ride-through state.

Establishing equivalent models by using the foregoing simulation method provided in embodiments of this application specifically includes the following steps:
1. Record active power P waveforms and reactive power Q waveforms of output powers of all the 30 inverters in steady state before the grid voltage is changed and in a transient-state process of transitioning to the low-voltage-ride-through state after the grid voltage is changed.
2. Obtain line impedance RL values from the 30 inverters to a transformer, namely, a grid-connected point.
3. Perform clustering on the 30 inverters based on the P waveforms, the Q waveforms, and the RL values of the 30 inverters, to obtain a plurality of clusters.
4. Construct equivalent models for the clusters by using a capacity-weighting method.

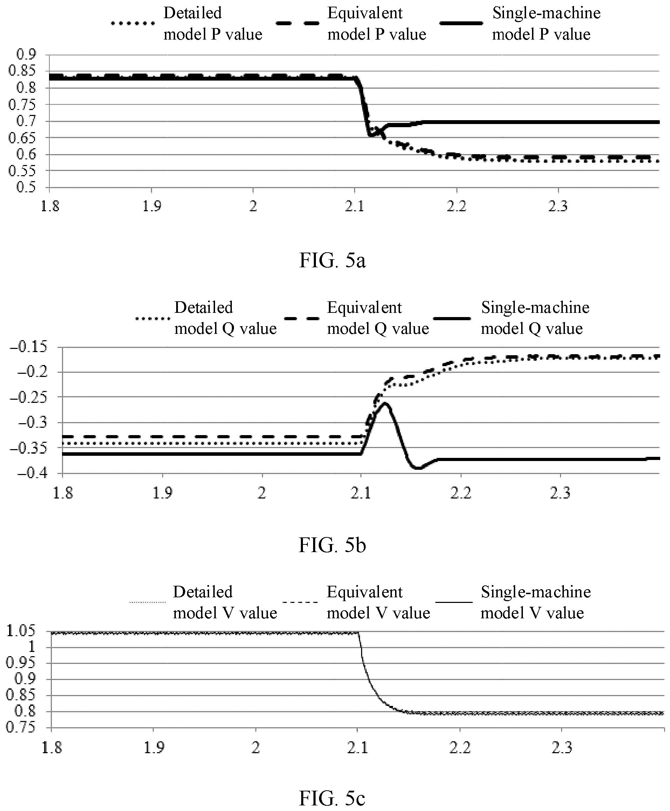

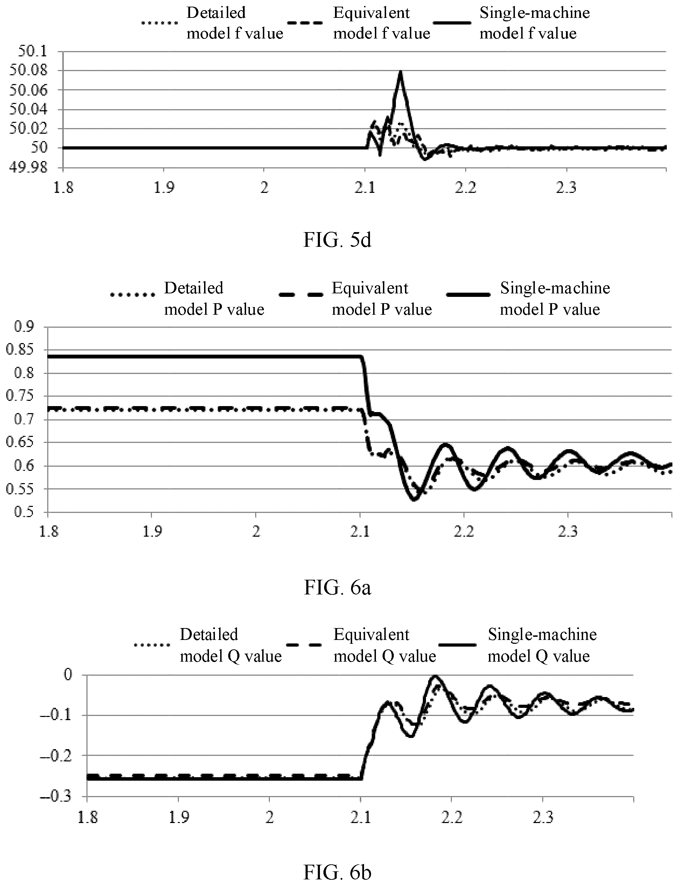

Using a simulation result output by a detailed model as a reference, the simulation result output by the equivalent models established by using the foregoing simulation method provided in embodiments of this application is compared with a simulation result output by a single-machine model constructed by using a single-machine equivalence method. Referring to FIG. 5a, it can be learned that, there is a relatively small error between an active power P value simulated by the equivalent models established by using the foregoing simulation method provided in embodiments of this application and an active power P value simulated by the detailed model, and there is a relatively large error between an active power P value simulated by the single-machine model and the active power P value simulated by the detailed model. Referring to FIG. 5b, it can be learned that, there is a relatively small error between a reactive power Q value simulated by the equivalent models established by using the foregoing simulation method provided in embodiments of this application and a reactive power Q value simulated by the detailed model, and there is a relatively large error between a reactive power Q value simulated by the single-machine model and the reactive power Q value simulated by the detailed model. Referring to FIG. 5c, it can be learned that, errors of an output voltage V value simulated by the equivalent models established by using the foregoing simulation method provided in embodiments of this application and an output voltage V value simulated by the single-machine model relative to an output voltage V value simulated by the detailed model are both relatively small. Referring to FIG. 5d, it can be learned that, there is a relatively small error between an output frequency f value simulated by the equivalent models established by using the foregoing simulation method provided in embodiments of this application and an output frequency f value simulated by the detailed model, and there is a relatively large error between an output frequency f value simulated by the single-machine model and the output frequency f value simulated by the detailed model.

### Embodiment 2:

A difference between Embodiment 2 and Embodiment 1 lies in that, compared with Embodiment 1, Embodiment 2 reduces a grid strength to SCR < 2. Equivalent models are established by using the same steps as Embodiment 1.

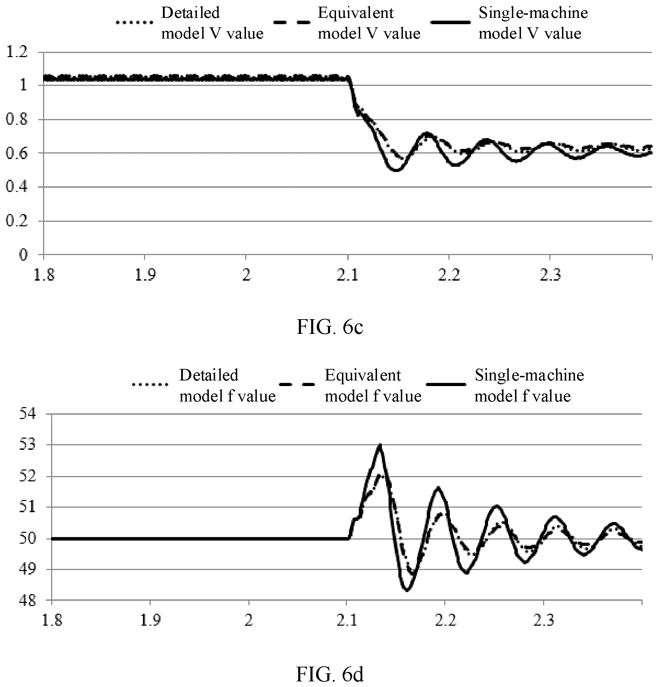

Using a simulation result output by a detailed model as a reference, the simulation result output by the equivalent models established by using the foregoing simulation method provided in embodiments of this application is compared with a simulation result output by a single-machine model constructed by using a single-machine equivalence method. Referring to FIG. 6a, it can be learned that, there is a relatively small error between an active power P value simulated by the equivalent models established by using the foregoing simulation method provided in embodiments of this application and an active power P value simulated by the detailed model, and there is a relatively large error between an active power P value simulated by the single-machine model and the active power P value simulated by the detailed model. Referring to FIG. 6b, it can be learned that, there is a relatively small error between a reactive power Q value simulated by the equivalent models established by using the foregoing simulation method provided in embodiments of this application and a reactive power Q value simulated by the detailed model, and there is a relatively large error between a reactive power Q value simulated by the single-machine model and the reactive power Q value simulated by the detailed model. Referring to FIG. 6c, it can be learned that, there is a relatively small error between an output voltage V value simulated by the equivalent models established by using the foregoing simulation method provided in embodiments of this application and an output voltage V value simulated by the detailed model, and there is a relatively large error between an output voltage V value simulated by the single-machine model and the output voltage V value simulated by the detailed model. Referring to FIG. 6d, it can be learned that, there is a relatively small error between an output frequency f value simulated by the equivalent models established by using the foregoing simulation method provided in embodiments of this application and an output frequency f value simulated by the detailed model, and there is a relatively large error between an output frequency f value simulated by the single-machine model and the output frequency f value simulated by the detailed model. It can be learned by analyzing the simulation data that, an error of the simulation result of the equivalent models established by using the simulation method provided in embodiments of this application relative to that of the detailed model is 1.0%, while an error of the simulation result of the single-machine model relative to that of the detailed model is 12.0%.

### Embodiment 3:

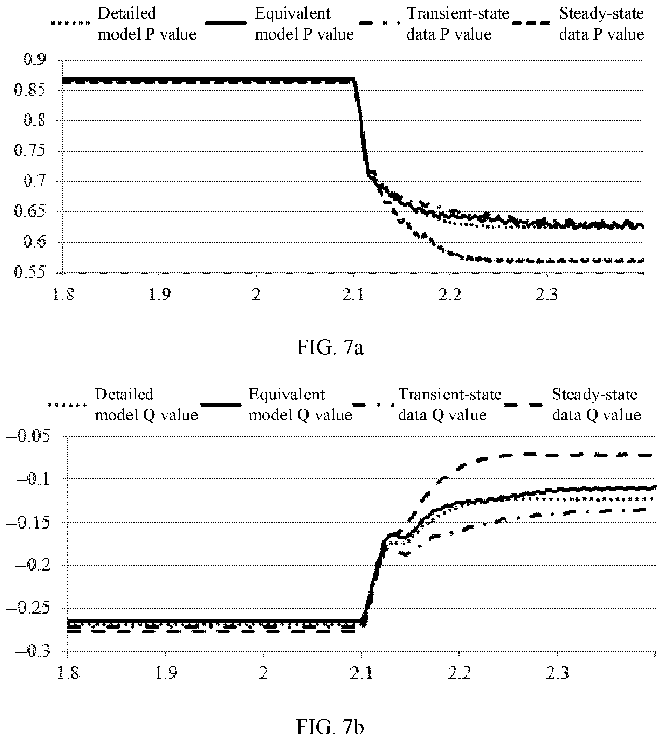

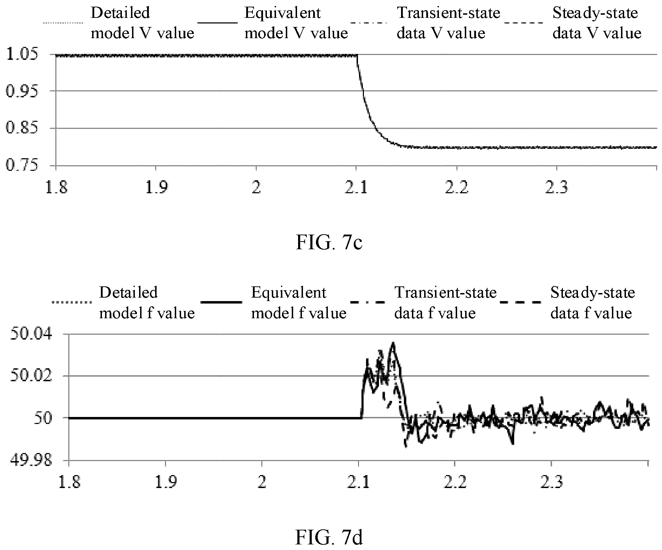

In Embodiment 3, clustering is performed by using the same clustering algorithm and different collected data, and clustering results are significantly different. Using a simulation result output by a detailed model as a reference, the simulation result output by the equivalent models established by using the foregoing simulation method provided in embodiments of this application is compared with a simulation result output by a model constructed using transient-state data, and a simulation result output by a model constructed using steady-state data. Referring to FIG. 7a, it can be learned that, there is a relatively small error between an active power P value simulated by the equivalent models established by using the foregoing simulation method provided in embodiments of this application and an active power P value simulated by the detailed model, and there is a relatively large error between an active power P value simulated by the model constructed using the steady-state data and the active power P value simulated by the detailed model. Referring to FIG. 7b, it can be learned that, there is a relatively small error between a reactive power Q value simulated by the equivalent models established by using the foregoing simulation method provided in embodiments of this application and a reactive power Q value simulated by the detailed model, there is a relatively large error between a reactive power Q value simulated by the model constructed using the transient-state data and the reactive power Q value simulated by the detailed model, and there is also a relatively large error between a reactive power Q value simulated by the model constructed using the steady-state data and the reactive power Q value simulated by the detailed model. Referring to FIG. 7c, it can be learned that, errors of an output voltage V value simulated by the equivalent models established by using the foregoing simulation method provided in embodiments of this application, an output voltage V value simulated by the model constructed using the steady-state data, and an output voltage V value simulated by the model constructed using the transient-state data relative to an output voltage V value simulated by the detailed model are all relatively small. Referring to FIG. 7d, it can be learned that, there is a relatively small error between an output frequency f value simulated by the equivalent models established by using the foregoing simulation method provided in embodiments of this application and an output frequency f value simulated by the detailed model, and there is a relatively large error between an output frequency f value simulated by the model constructed using the steady-state data and the output frequency f value simulated by the detailed model. In addition, it can be learned from the following table that a simulation time of the model constructed using the transient-state data is relatively long.

| Data used | Number of clusters | Active power error | Simulation time |
|---|---|---|---|
| All data points in the time window | 5 | 0.8% | 27.0 |
| Use steady-state time data | 5 | 5.47% | 26.6 |
| Use transient-state time data | 11 | 1.39% | 84.4 |

Embodiments of this application provide the foregoing simulation method. In a data collection phase, all data of all inverters in steady-state and transient-state processes is collected; then clustering is performed on all the inverters based on the data and line impedances to obtain a plurality of clusters; equivalent models are respectively constructed for the plurality of clusters; and an internal algorithm parameter of the clustering is adjusted, so that an error of equivalent models obtained by using the adjusted clustering is less than a specified value. The clustering of all the inverters and the construction of the equivalent models can increase the simulation speed compared with a detailed model, and can increase the simulation accuracy compared with a single-machine model. In the clustering of all the inverters, the use of all the data in the steady-state and transient-state processes for the clustering leads to an increase in the overall accuracy of the finally simulated equivalent models for steady -state and transient-state fitting.

It is clearly that, a person skilled in the art can make various modifications and variations to the present invention without departing from scope of the present invention. The present invention is intended to cover these modifications and variations provided that they fall within the scope of protection defined by the following claims and their equivalent technologies.

## Claims

1. A simulation method for a photovoltaic power station, comprising:
obtaining line impedances of all inverters in the photovoltaic power station to a grid-connected point;
collecting first output data of all the inverters in a first time period and second output data of all the inverters in a second time period, wherein the first time period and the second time period are continuous time periods, and output data of at least one inverter among all the inverters is adjusted at a time point between the first time period and the second time period;
performing clustering on all the inverters based on the first output data, the second output data, and the line impedances of all the inverters to obtain a plurality of clusters;
respectively constructing equivalent models for the plurality of clusters; and
adjusting an internal algorithm parameter of the clustering, so that an error of equivalent models obtained by using the adjusted clustering is less than a specified value.

2. The simulation method according to claim 1, wherein collecting the first output data of all the inverters in the first time period and the second output data of all the inverters in second time period comprises:
collecting one or more of an output active power waveform, an output reactive power waveform, an output voltage waveform, or an output current waveform of all the inverters in the first time period and the second time period.

3. The simulation method according to claim 1 or 2, wherein adjusting the output data of the at least one inverter among all the inverters comprises:
adjusting one or more of an output active power, an output reactive power, an output voltage, or an output current of one or more inverters among all the inverters; or
adjusting one or more of an output active power, an output reactive power, an output voltage, or an output current of all the inverters.

4. The simulation method according to any one of claims 1 to 3, further comprising: adjusting a proportion of duration of the first time period to duration of the second time period.

5. The simulation method according to any one of claims 1 to 4, wherein performing the clustering on all the inverters comprises:
performing the clustering on all the inverters by using a k-means clustering algorithm, an affinity propagation clustering algorithm, a spectral clustering algorithm, or a hierarchical clustering algorithm.

6. The simulation method according to any one of claims 1 to 5, wherein respectively constructing the equivalent models for the plurality of clusters comprises:
determining a central line impedance value of each of the plurality of clusters; and
respectively constructing the equivalent models for the plurality of clusters based on the central line impedance value.

7. The simulation method according to any one of claims 1 to 6, wherein respectively constructing the equivalent models for the plurality of clusters comprises:
respectively constructing the equivalent models for the plurality of clusters by using a capacity-weighting method.

8. The simulation method according to any one of claims 1 to 7, wherein adjusting an internal algorithm parameter of the clustering comprises:
separately performing simulation by using the equivalent models and a detailed model constructed for each of the inverters, to obtain simulation results; and
when a difference between the simulation results is greater than the specified value, adjusting the internal algorithm parameter of the clustering.

9. The simulation method according to claim 8, wherein separately performing the simulation by using the equivalent models and the detailed model constructed for each of the inverters, to obtain the simulation results comprises:
in the process of separately performing the simulation by using the equivalent models and the detailed model, adjusting output data, and obtaining simulation results in a continuous time period comprising a time point of the adjustment.

10. The simulation method according to claim 8 or 9, wherein the simulation results comprise an output active power waveform, an output reactive power waveform, an output voltage waveform, and an output frequency waveform.
